# EUROPEAN PATENT APPLICATION

(11) **EP 1 574 299 A1**
(43) Date of publication of application: **14.09.2005**
(21) Application number: 05004968.3
(22) Date of filing: 07.03.2005
(51) Int. Cl.: B25J 5/00, B25J 18/00, B25J 18/02

(54) **Molded-product removing device**

(30) Priority: 10.03.2004 JP 2004067339
(71) Applicant: FANUC LTD, Yamanashi 401-0597 (JP)
(72) Inventor: Kinoshita, Satoshi, Minamitsuru-gun Yamanashi 401-0511 (JP); Yasumura, Mitsuhiro, Minamitsuru-gun Yamanashi 401-0302 (JP); Yamashiro, Hikaru, Fuefuki-shi Yamanashi 406-0834 (JP); Matsui, Hideo, Minamitsuru-gun Yamanashi 401-0511 (JP)
(74) Representative: Schmidt, Steffen J.

(57) **Abstract**

A molded-product removing device (10) includes a base (10), a rotation arm mechanism including a plurality of rotation arms (12, 14, 16) serially connected to each other so as to be rotatable about vertical axes (11, 13, 15), respectively, and a lift arm (17) mounted on the forward end rotation arm (16) of the rotation arm mechanism for moving up and down a holding mechanism arranged at the forward end thereof. The lift arm (17) is configured as a two-stage speed increasing mechanism and a pinion-rack mechanism for driving the two-stage speed increasing mechanism.

## Description

### BACKGROUND OF THE INVENTION

### 1. Field of the Invention

The present invention relates to a molded-product removing device for removing a molded product from a mold of a molding apparatus.

### 2. Description of the Related Art

In order to mold a product in a molding apparatus, open the mold and remove the molded product left in the opened mold, a molded-product removing device is disposed together with the molding apparatus. Generally, the molded-product removing device is of an orthogonal coordinate type comprising a combination of linear motion mechanisms and a lift arm having at the forward end thereof a hand for holding the molded product to remove it from the mold.

The molded-product removing device may be arranged either adjacently on the side of the molding apparatus or on the top of it. Normally, the molded-product removing device is mounted on the top of the molding apparatus. However, in such a case, the total height of the apparatus is increased. Therefore, a problem arises in that the molded-product removing device cannot be mounted on the molding apparatus in the case that the molding apparatus is installed in a place with a low ceiling. Thus, a molded-product removing device is preferably as low as possible.

One of the factors affecting the height of the molded-product removing device is the lift arm movable in a vertical direction. The lift arm is movable in the vertical direction (Z-axis direction) and is used to move a molded-product holding mechanism such as a hand or a suction device. It includes a guide unit, which is required to be at least as tall as the lift stroke.

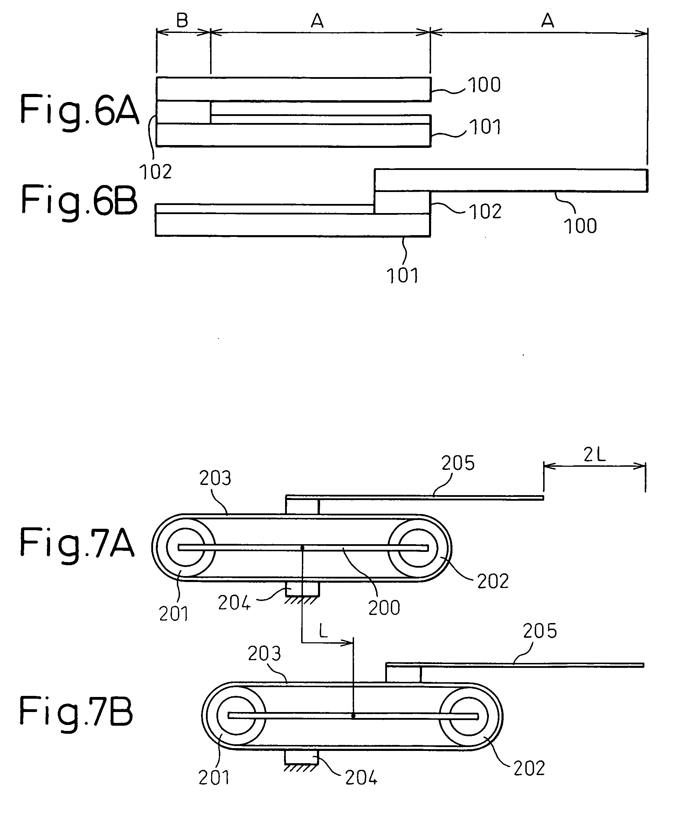

Figs. 6A and 6B are diagrams for illustrating a linear motion mechanism used in the lift arm. The linear motion mechanism includes an arm 100 and a guide base 101. The arm 100 is supported on the guide base 101 via a support member 102 and adapted to move along the guide base 101 in a horizontal direction, as shown in Figs. 6A and 6B. When the stroke of the arm 100 is designated by "A", and the length of the support member 102 (the length in the moving direction of the arm 100) by "B", the guide base 101 is required to have a length of (A + B). Thus, the use of such a linear motion mechanism in the lift arm of the molded-product removing device unavoidably increases the height of the molded-product removing device.

In view of this, a two-stage speed increasing mechanism is often used to reduce the total length of the lift arm of the molded-product removing device. Figs. 7A and 7B are diagrams for illustrating the operation of a two-stage speed increasing mechanism. The two-stage speed increasing mechanism includes a support member 200, and two pulleys 201, 202 disposed at either end of the support member 200 and supported by the support member 200 so as to be rotatable. A belt 203 is set up between the two pulleys 201 and 202 with a predetermined tension. The belt 203 has a portion thereof fixed to a fixing portion 204 provided on a base or the like of the machine on which the two-stage speed increasing mechanism is to be mounted. The belt 203 also has another portion thereof which is opposed to the portion thereof fixed to the fixing portion 204 and to which an operating arm 205 is fixed. When the support member 200 is moved by a distance L from a position shown in Fig. 7A, the operating arm 205 moves by the distance L from the initial position. On the other hand, the belt 203, which is fixed to the fixing portion 204, rotates by the distance L between the two pulleys 201 and 202. As the rotation of the belt 203 moves the operating arm 205 together with the support member 200, the operating arm 205 moves by 2L as a result. In other words, the operating arm 205 moves twice the moving distance of the support member 200.

In the lift arm of the conventional molded-product removing device, the two-stage speed increasing mechanism shown in Figs. 7A and 7B has been used. Also, as a means for driving the support member of the two-stage speed increasing mechanism, a toothed belt mechanism has been used, because it is quiet in operation and light in weight and does not require lubrication.

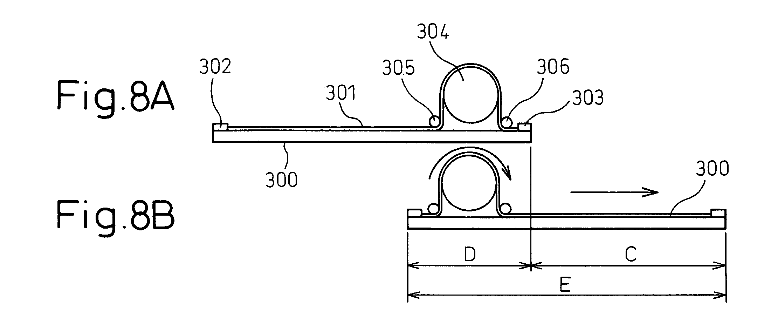

Figs. 8A and 8B are diagrams for schematically illustrating the toothed belt mechanism. The belt mechanism includes a movable member 300 and a toothed belt 301 arranged along the movable member 300. The belt 301 has two ends thereof fixed to either end of the movable member 300 by toothed belt fixing portions 302 and 303, respectively. The toothed belt 301 is mounted on the movable member 300 so that it is wound around a toothed pulley 304 mounted on a stationary base of another machine and is pressed against the toothed pulley 304 by two idler bearings 305, 306 disposed on the both sides of the toothed pulley 304. By driving the toothed pulley 304 to rotate, the movable member 300 can be moved from a position shown in Fig. 8A to a position shown in Fig. 8B. This toothed belt mechanism requires at least a length E equal to the sum of the stroke C of the movable member 300 and the length D of the drive mechanism portion configured of the idler bearings 305, 306 and the pulley 304. In other words, the toothed belt mechanism is required to be considerably longer than the stroke C.

### SUMMARY OF THE INVENTION

Accordingly, it is an object of the present invention to provide a molded-product removing device having a shorter lift arm accommodable in a lower occupied space than the conventional molded-product removing device.

According to the present invention, there is provided a molded-product removing device mounted on a molding apparatus for removing a molded product from an opened mold of the molding apparatus, which includes a base fixed at a top portion of the molding apparatus where the molded-product removing device is mounted, a rotation arm mechanism including a plurality of rotation arms serially connected to each other so as to be rotatable about vertical axes, respectively, and a lift arm mounted on the forward end rotation arm of the rotation arm mechanism for moving up and down a holding mechanism arranged at the forward end thereof, wherein the lift arm includes a support plate supported by the forward end rotation arm of the rotation arm mechanism, a first frame supported on the support plate via a first rail extending in a lifting direction of the lift arm to be slidable in the lifting direction, and a second frame supported on the first frame via a second rail extending parallel to the first rail to be slidable in the lifting direction; wherein a rack is disposed on the first frame to extend parallel to the first rail, and a drive means for driving a pinion meshing with the rack is fixed on the support plate; and wherein two toothed pulleys arranged along the lifting direction in a juxtaposed relationship are supported on the first frame so as to be rotatable about an axis orthogonal to the lifting direction of the lift arm, a toothed belt is set up between the two toothed pulleys with a predetermined tension, and a portion of the toothed belt is fixed to the support plate while a portion of the toothed belt opposed to the portion thereof fixed to the support plate is fixed to the second frame.

The molded-product removing device according to the present invention has the configuration described above, thereby making it possible to reduce the height of the molded-product removing device and therefore the height of the occupied space.

The rotation arm mechanism preferably includes a base, a first rotation arm having one end thereof supported by the base so as to be rotatable about a first axis, a second rotation arm having one end thereof supported by the other end of the first rotation arm so as to be rotatable about a second axis extending parallel to the first axis, and a third rotation arm having one end thereof supported by the other end of the second rotation arm so as to be rotatable about a third axis extending parallel to the second axis. Further, at least one of the rack and the pinion may be formed of resin, thereby reducing noise while at the same time eliminating the need for lubrication.

The molded-product removing device according to the present invention has a feature in that it is low in height. In addition, the rotation arms of the molded-product removing device are adapted to rotate only in the horizontal plane, and therefore, even if the molded-product removing device according to the present invention is mounted on the top of the molding apparatus, it can achieve an effect in that it does not change the amount of occupied space due to the motion of the rotation arms. Also, the lift arm has a lower height than the conventional one, and therefore, even if the molded-product removing device is mounted on the top of the molding apparatus, the molding apparatus is lower in total height thereof than that using the conventional device. This allows the molded-product removing device to be mounted on the top of the molding apparatus even in an installation environment having a low ceiling.

### BRIEF DESCRIPTION OF THE DRAWINGS

The above and other objects, features and advantages will be described in more detail below, based on the preferred embodiments of the present invention with reference to the accompanying drawings, wherein:
Fig. 1 is a perspective view schematically showing a molding apparatus and a molded-product removing device mounted on the top of the molding apparatus according to the present invention;
Fig. 2 is a schematic diagram showing a configuration of the molded-product removing device according to an embodiment of the present invention;
Fig. 3A is a plan view of a lift arm used in the molded-product removing device shown in Fig. 2, as viewed in a lifting direction of the lift arm;
Fig. 3B is a side view of the lift arm of Fig. 3A as viewed from the left side thereof, showing a general configuration of a pinion-rack mechanism of the lift arm;
Fig. 3C is a side view of the lift arm of Fig. 3A as viewed from the right side thereof, showing a general configuration of a toothed belt mechanism of the lift arm;
Figs. 4A and 4B are diagrams for illustrating the operation of the pinion-rack mechanism, showing the rack contracted to maximum degree and the rack projected to maximum degree, respectively;
Fig. 5 is a view for comparing the pinion-rack mechanism with a toothed belt mechanism;
Fig. 6A and 6B are diagrams for illustrating a linear motion mechanism, showing a state in which the arm is contracted to maximum degree and a state in which the arm is projected to maximum degree, respectively;
Figs. 7A and 7B are diagrams for illustrating a two-stage speed increasing mechanism, showing a state in which the operating arm is relatively contracted and a state in which the operating arm is relatively projected, respectively; and
Figs. 8A and 8B are diagrams for illustrating the toothed belt mechanism, showing a position in which the movable member is moved leftmost and a position in which the movable member is moved rightmost.

### DETAILED DESCRIPTION

Embodiments of the present invention will be described below with reference to the drawings.

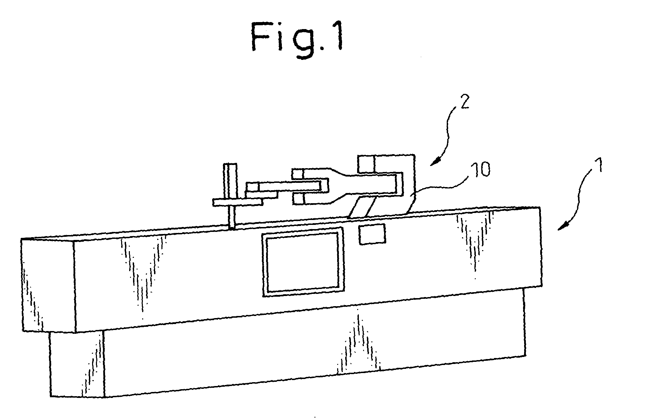

Fig. 1 is a perspective view schematically showing a molding apparatus 1 and a molded-product removing device 2 mounted on the top of the molding apparatus 1 according to an embodiment of the present invention. The molded-product removing device 2 is mounted on the top of the molding apparatus 1, such as on a stationary platen located thereon.

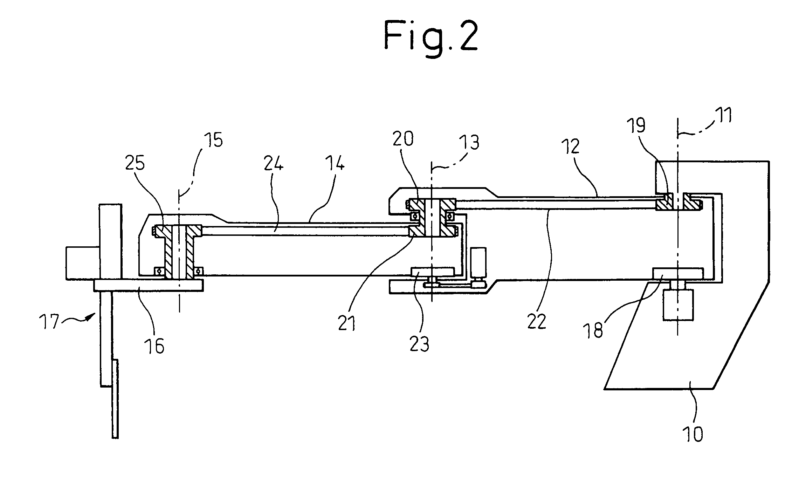

Fig. 2 is a schematic diagram showing a configuration of the molded-product removing device 2. The molding apparatus 1 has a base 10 mounted thereon for mounting the molded-product removing device 2 on the molding apparatus 1. A first rotation arm 12 having a hollow structure has one end thereof cantilevered by the base 10 so as to be rotatable about a first axis 11 extending in a vertical direction. The first rotation arm 12 has the other end thereof, which supports one end of a second rotation arm 14 having a hollow structure so as to be rotatable about a second axis 13 extending parallel to the first axis 11. The second rotation arm 14 also has the other end thereof, which supports one end of a third rotation arm 16 having a hollow structure so as to be rotatable about a third axis 15 extending parallel to the second axis 13. Further, a lift arm 17 adapted to extend/contract or move along an axis parallel to the third axis 15 is provided on a forward end of a rotation arm mechanism including the first to third rotation arms 12, 14, 16, i.e. on a forward end of the third rotation arm 16.

The base 10 has a hollow structure, and holds one end of the first rotation arm 12 so that the first rotation arm 12 can rotate about the first axis 11. The first rotation arm 12 is rotationally driven about the first axis 11 by a first arm drive means 18 configured, for example, of a motor and a reduction gear. A first pulley 19 formed with a through hole is fixedly mounted on the base 10 in opposed relation with the first arm drive means 18. The first pulley 19 is arranged in the internal space of one end of the first hollow rotation arm 12.

A second pulley 20 is mounted inside the other end of the first rotation arm 12 so as to be rotatable about the second axis 13. A third pulley 21 is integrated with the second pulley 20 and is formed with a through hole similarly to the second pulley 20. The second pulley 20 is arranged in the internal space of the first rotation arm 12, while the third pulley 21 is arranged in the internal space of the second rotation arm 14. A first belt 22 is set up between the first pulley 19 and the second pulley 20.

The second rotation arm 14 has one end thereof rotatably supported by the forward end of the first rotation arm 12, and is adapted to rotate about the second axis 13 by a second arm drive means 23 configured, for example, of a motor, a pulley, a belt, etc. disposed in the internal space of the first rotation arm 12. The second rotation arm 14 also has a hollow structure, and the third pulley 21 integrated with the second pulley 20 is arranged in the internal space of the second rotation arm 14. A fourth pulley 25 fixedly mounted on the third rotation arm 16 is supported by the other end of the second rotation arm 14 so as to be rotatable about the third axis 15. The fourth pulley 25 is also formed with a through hole. The fourth pulley 25 is arranged in the internal space of the second rotation arm 14, and a second belt 24 is set up between the fourth pulley 25 and the third pulley 21.

The third rotation arm 16, like the other rotation arms, has a hollow structure, and has a forward end thereof on which the lift arm 17 is mounted. The lift arm 17 has a forward end thereof on which a holding mechanism such as a hand or a suction device for holding the molded product or the runner is mounted.

A cable, a hole and the like for supplying a drive force such as electric power or air, a power signal, etc., to operate the first arm drive means 18, the second arm drive means 23, a drive means (not shown) for the lift arm 17 and the holding mechanism, extend and are connected to each drive means through the internal spaces of the hollow base 10, the first pulley 19, the second pulley 20, the third pulley 21, the fourth pulley 25, the first rotation arm 12, the second rotation arm 14 and the third rotation arm 16. In the case where the rotation arms 12, 14, 16 have no hollow structure, on the other hand, the cable, the hose and the like may be extended through the holes of the pulleys 19, 20, 21, 25 and laid along the side surfaces of the rotation arms 12, 14, 16. Regarding the diameters of the first to fourth pulleys 19, 20, 21, 25, it is at least required that the first pulley 19 and the second pulley 20 have the same diameter and that the third pulley 21 and the fourth pulley 25 have the same diameter. All the pulleys 19, 20, 21, 25 may have the same diameter.

Next, the operation of the rotation arm mechanism will be described.

The first rotation arm 12 is rotated by an angle θ by the first arm drive means 18. In this step, the first pulley 19 does not rotate because it is fixed to the base 10. Since the first belt 22 is set up between the first pulley 19 fixed to the base 10 and the second pulley 20 rotatably mounted on the first rotation arm 12 and the first pulley 19 and the second pulley 20 have the same diameter, the second pulley 20 is rotated by an angle θ relative to the first rotation arm 12 in a rotating direction opposite to that of the first rotation arm 12 when the first rotation arm 12 rotates by the angle θ. The third pulley 21 integrated with the second pulley 20 is also rotated by the angle θ in the same rotating direction as that of the second pulley 20.

Since the second belt 24 is set up between the third pulley 21 and the fourth pulley 25, the fourth pulley 25 rotates along with the rotation of the third pulley 21. The third pulley 21 and the fourth pulley 25, which have the same diameter, rotate by the same angle θ. When the fourth pulley 25 rotates by the angle θ, the third rotation arm 16 fixed to the fourth pulley 25 also rotates by the same angle θ. As a result, even if the first rotation arm 12 is rotated about a vertical axis, the third rotation arm 16 rotates about a vertical axis by the same amount as the first rotation arm 12 in the direction opposite to that of the first rotation arm 12. Therefore, the orientation of the third rotation arm 16 is not changed and always remains directed in a predetermined direction, thereby keeping the orientation of the lift arm 17 unchanged.

When the second rotation arm 14 is rotated counterclockwise by an angle α by the second arm drive means 23, neither the first rotation arm 12 nor the first pulley 19 rotates and therefore, the third pulley 21, which is integrated with the second pulley 20 rotating simultaneously with the first pulley 19 through the first belt 22, does not rotate (does not rotate relative to the first rotation arm 12). On the other hand, since the second belt 24 is set up between the third pulley 21 and the fourth pulley 25, the rotation of the second rotation arm 14 causes the fourth pulley 25 to rotate relative to the second rotation arm 14 in a rotating direction opposite to that of the second rotation arm 14. Since the third pulley 21 and the fourth pulley 25 have the same diameter, the angle of rotation of the fourth pulley 25 is equal to the angle α of rotation of the second rotation arm 14, while the rotating direction of the fourth pulley 25 is opposite to that of the second rotation arm 14. In addition, both the second rotation arm 14 and the fourth pulley 25 rotate about a vertical axis. Therefore, the third rotation arm 16 fixed to the fourth pulley 25 is rotated by the same angle as the second rotation arm 14 in a rotating direction opposite to that of second rotation arm 14, while keeping the same orientation as before rotation.

Therefore, even if the first rotation arm 12 and the second rotation arm 14 rotate at the same time, the third rotation arm 16 remains in the same orientation and always maintains a predetermined direction. Thus, the holding mechanism such as a hand or the like mounted on the forward end of the lift arm 17 always maintains a predetermined direction, so that it can always maintain a predetermined orientation with respect to a surface of an opened mold. Also, as the first rotation arm 12 rotates about the first axis 11 and the second rotation arm 14 rotates about the second axis 13, the third rotation arm 16 (and the lift arm 17) mounted on the forward end of the second rotation arm 14 can be moved linearly or arcuately as desired in a horizontal plane. In this embodiment, the first rotation arm 12 and the second rotation arm 14 are driven by the first arm drive means 18 and the second arm drive means 23, whereas the third rotation arm 16 is driven not by an exclusive drive means but by a mechanism including the first to fourth pulleys 19 to 21, 25 and the first and second belts 22, 24. This mechanism including the pulleys and the belts allows the third rotation arm 16 to always maintain a predetermined orientation. This mechanism is employed in view of the need to maintain in a predetermined direction the holding mechanism mounted on the forward end of the lift arm 17 when removing the molded product from the mold. In place of this mechanism including the pulleys and belts, a drive means such as a motor can of course be used to drive the third rotation arm.

Each of the first to third rotation arms 12, 14, 16 is rotated about an axis extending in the same direction and therefore, they rotate in a horizontal plane about vertical axes, while only the lift arm 17 moves in the vertical direction. Thus, the reduced height of the lift arm 17 can reduce the total height of the molded-product removing device 2. As a result, even if the molded-product removing device 2 is mounted on the top of the molding apparatus 1 as shown in Fig. 1, the overall height of the molding apparatus 1 can be lower than that using the conventional molded-product removing device. This makes it possible to install the molding apparatus 1 with the molded-product removing device 2 even in a place having a low ceiling.

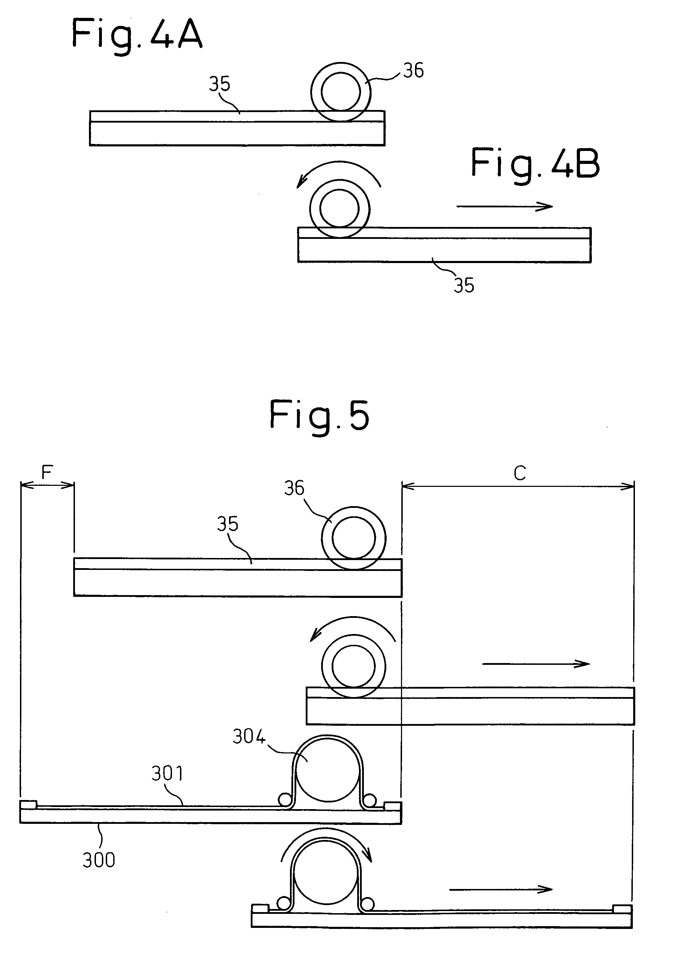

In order to reduce the height of the drive mechanism of the lift arm 17, this embodiment employs a two-stage speed increasing mechanism as shown in Fig 7 as a drive mechanism of the lift arm 17, while at the same time using a pinion-rack mechanism as shown in Fig. 4 as a drive means to drive the support member of the two-stage speed increasing mechanism.

Fig. 4A shows a state in which the rack 35 of the pinion-rack mechanism is contracted to the maximum degree, while Fig. 4B shows a state in which the pinion 36 of the pinion-rack mechanism is driven to project the rack 35 to the maximum degree.

Fig. 5 is a view for comparing the pinion-rack mechanism with a toothed belt mechanism. Even if the stroke of the rack 35 and the stroke of the movable member 300 have the same length C, the pinion-rack mechanism, which does no require a pair of the idler bearings 305, 306 of the toothed belt mechanism, can be shortened in length as compared with the toothed belt mechanism. Fig. 5 shows the fact that the pinion-rack mechanism can be formed to be shorter a distance F than the toothed belt mechanism. In this embodiment, the lift arm 17 is formed using such pinion-rack mechanism and two-stage speed increasing mechanism.

A pinion-rack mechanism normally requires lubrication. However, lubricating oil, if attached to the molded product, degrades the quality of the molded product. Therefore, lubrication of the molded-product removing device with a lubricating oil is not desirable. Also, the pinion-rack mechanism has a disadvantage in that considerable noise is generated when the pinion and the rack come to engage each other. In order to eliminate this problem, in this embodiment, at least one of the pinion and the rack is formed of resin, thereby to realize a pinion-rack mechanism requiring no lubricating oil and generating only low noises.

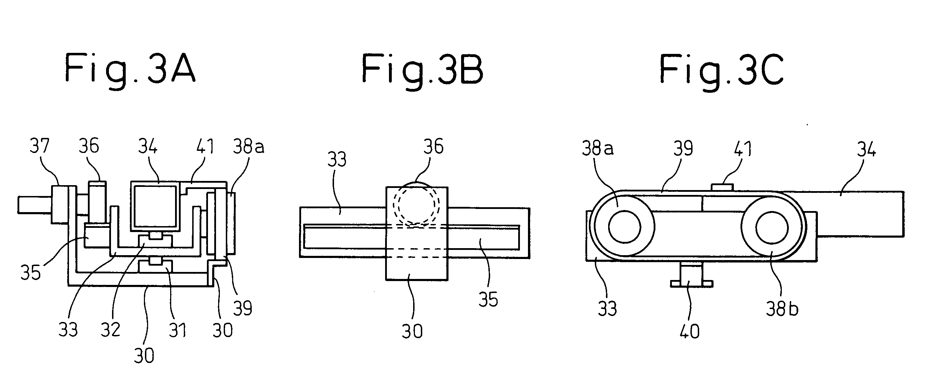

Figs. 3A to 3C are views for illustrating the structure of the lift arm 17 used in this embodiment. Fig. 3A is a plan view of the lift arm 17 as viewed in a lifting direction of the lift arm 17. Specifically, in Fig. 3A, the lift arm 17 moves in a direction perpendicular to the drawing. Also, Fig. 3B is a side view of the lift arm 17 of Fig. 3A as viewed from the left side thereof, showing a general configuration of the pinion-rack mechanism thereof. On the other hand, Fig. 3C is a side view of the lift arm 17 of Fig. 3A as viewed from the right side thereof, showing a general configuration of the toothed belt mechanism thereof.

The lift arm 17 includes a support plate 30 to be mounted on the third rotation arm 16. The support plate 30 has a first rail 31 provided thereon, on which a first frame 33 is in turn supported, so that the first frame 33 can move linearly while being guided by the first rail 31. Also, a second rail 32 extending in parallel to the first rail is provided on the first frame 33, and the second frame 34 is supported on the second rail 32, so that the second frame 34 can move linearly while being guided by the second rail 32. Also, the rack 35 is mounted on the first frame 33, and the pinion 36 is mounted rotatably on the support plate 30. The pinion 36 is adapted to be driven by the drive means 37 (a motor and a reduction gear or the like) mounted on the support plate 30 while being in mesh with the rack 35.

The first frame 33 has toothed pulleys 38a, 38b rotatably mounted on the ends thereof. A toothed belt 39 is set up between the two toothed pulleys 38a, 38b with a predetermined tension. A portion of the toothed belt 39 is fixed to a fixing portion 40 provided on the support plate 30. Further, the portion of the toothed belt 39 in opposed relation to the fixing portion 40 is connected to the second frame 34 by a fixing means 41.

When the pinion 36 is driven by the drive means 37, the rack 35 in mesh with the pinion 36 is moved linearly (moved up or down in vertical direction), and the first frame 33 integrally coupled with the rack 35 is moved linearly along the first rail 31. When the first frame 33 is moved, the toothed belt 39 and a pair of the toothed pulleys 38a, 38b mounted on the first frame 33 are also moved. On the other hand, the toothed belt 39 is fixed to the support plate 30 via the fixing portion 40 and therefore rotated between the toothed pulleys 38a, 38b. This rotation of the toothed belt 39 makes the second frame 34, connected to the toothed belt 39 by the fixing means 41, move linearly along the second rail 32 (move up or down in vertical direction). It should be noted that the holding mechanism such as a hand is mounted on the forward end of the second frame 34.

As shown in Fig. 3B, the use of the pinion-rack mechanism substantially eliminates the need of a play area and makes it possible to utilize the first frame 33 effectively over the entire length thereof. Further, the use of the toothed belt mechanism shown in Fig. 3C makes it possible to move the second frame 34 and the holding mechanism mounted on the forward end of it twice as much as the first frame 33.

The first to third rotation arms 12, 14, 16 of the molded-product removing device 2 configured in this way can be pivoted all about the axes extending in vertical direction, and therefore the height of the space occupied by the machine can be kept low. Also, the lift arm 17 is configured by the pinion-rack mechanism and the toothed belt mechanism as described above, and therefore can be lower in height than the conventional lift arm. Thus, the molded-product removing device 2 can also be mounted on top of the molding apparatus 1 installed in an environment having a low ceiling.

While the present invention has been described with reference to specific embodiments shown in the accompanying drawings, these embodiments are only illustrative and not limitative. Therefore, the scope of the present invention is only limited by the appended claims, and the preferred embodiments thereof can be modified or changed without departing from the scope of the claims.

## Claims

1. A molded-product removing device (2) mounted on a molding apparatus (1) for removing a molded product from an opened mold of said molding apparatus (1), said molded-product removing device comprising a base (10) fixed at a top portion of said molding apparatus (1) where said molded-product removing device (2) is mounted, a rotation arm mechanism including a plurality of rotation arms (12, 14, 16) serially connected to each other so as to be rotatable about vertical axes (11, 13, 15), respectively, and a lift arm (17) mounted on the forward end rotation arm (16) of said rotation arm mechanism for moving up and down a holding mechanism arranged at the forward end thereof, said molded-product removing apparatus (2) **characterized in that**:
said lift arm (17) includes a support plate (30) supported by said forward end rotation arm (16), a first frame (33) supported on said support plate (30) via a first rail (31) extending in a lifting direction of said lift arm (17) to be slidable in said lifting direction, and a second frame (34) supported on said first frame (33) via a second rail (32) extending parallel to said first rail (31) to be slidable in said lifting direction;
a rack (35) is disposed on said first frame (33) to extend parallel to said first rail (31), and a drive means (37) for driving a pinion (36) meshing with the rack (35) is fixed on the support plate (30); and
two toothed pulleys (38a, 38b) arranged along said lifting direction in a juxtaposed relationship are supported on said first frame (33) so as to be rotatable about an axis orthogonal to said lifting direction of said lift arm (17), a toothed belt (39) is set up between said two toothed pulleys (38a, 38b) with a predetermined tension, and a portion of said toothed belt (39) is fixed to said support plate (30) while a portion of said toothed belt (39) opposed to said portion thereof fixed to said support plate is fixed to said second frame (34) .

2. The molded-product removing device according to claim 1, wherein said rotation arm mechanism comprises said base (10), a first rotation arm (12) having one end thereof supported by said base (10) so as to be rotatable about a first axis (11), a second rotation arm (14) having one end thereof supported by the other end of said first rotation arm (12) so as to be rotatable about a second axis (13) extending parallel to said first axis (11), and a third rotation arm (16) having one end thereof supported by the other end of said second rotation arm (14) so as to be rotatable about a third axis (15) extending parallel to said second axis (13).

3. The molded-product removing device according to claim 1 or 2, wherein at least one of said rack (35) and said pinion (36) is formed of resin.
